# EUROPÄISCHE PATENTSCHRIFT

(11) **EP 1 772 048 B1**
(45) Veröffentlichungstag und Bekanntmachung des Hinweises auf die Patenterteilung: **03.10.2012**
(21) Anmeldenummer: 06020922.8
(22) Anmeldetag: 05.10.2006
(51) Int. Cl.: G06M 1/10, G06M 11/00, A01C 7/10

(54) **Vorrichtung zum optischen Zählen kleiner Körperchen**
Device for optical counting of small particles
Dispositif de comptage de petites particules

(30) Priorität: 10.10.2005 DE 102005048744
(43) Veröffentlichungstag der Anmeldung: 11.04.2007
(73) Patentinhaber: Amazonen-Werke H. Dreyer GmbH & Co. KG, 49205 Hasbergen (DE)
(72) Erfinder: Marquering, Johannes, Dr., 49176 Borgloh (DE); Kötter, Heiner, 49086 Osnabrück (DE); Heitmeyer, Kilian, 49152 Bad Essen (DE)

(56) Entgegenhaltungen:
- EP-A- 1 560 157
- EP-A2- 0 195 420
- EP-A2- 0 298 549
- DE-A1- 3 419 883
- US-A- 4 490 801
- US-A- 6 078 635

## Beschreibung

Die Erfindung betrifft eine Vorrichtung zum optischen Zählen kleiner Körperchen gemäß des Oberbegriffes des Patentanspruches 1.

Eine derartige Vorrichtung, die bei einer Sämaschine verwirklicht ist, ist durch die DE 34 19 883 A1 bekannt. Bei dieser Vorrichtung ist in zumindest einer der Saatleitungen der Sämaschine ein mit optischen Sensoren besetzter Messraum vorgesehen, den die kleinen Körperchen, hier Saatkörner passieren müssen. Hierbei unterbrechen die Samenkörner den Lichtgang zwischen einem Lichtemitter und einem Lichtdetektor der Sensoren. Die Häufigkeit der Unterbrechung des Lichtganges wird von einer elektronischen Einrichtung ausgewertet und hieraus Rückschlüsse auf die Anzahl der den Messraum passierenden Saatkörner gezogen. Bei einer landwirtschaftlichen Sämaschine verschmutzen die Sensoren bzw. die die Sensoren abdeckenden lichtdurchlässigen Scheiben durch an den Saatkörnern anhaftenden Staub, Beizpartikel oder sich im Saatgut befindliche Staubpartikel. Wenn die Sensoren bzw. der die Sensoren abdeckenden lichtdurchlässigen Elemente verschmutzt sind, wird das Messergebnis verfälscht bzw. bei einer zu starken Verschmutzung gelangt überhaupt kein Licht mehr vom Lichtemitter zu dem Lichtdetektor.

Die US 44 90 801 zeigt einen Partikelsensor mit einer aus einem Luftkanal bestehenden Reinigungs- und Reinhaltevorrichtung. In dem Luftkanal wird von dem Gebläse gefilterte Luft in das die Sensoren aufnehmende Gehäuse eingeleitet.

Der Erfindung liegt die Aufgabe zugrunde, in einfacher Weise den Sensor bzw. die den Sensor abschirmenden lichtdurchlässigen Elemente vor Verunreinigung zu schützen.

Diese Aufgabe wird erfindungsgemäß durch die kennzeichnenden Merkmale des Anspruch 1 gelöst. Mittels dieser Reinigungsvorrichtung und/oder Reinhaltevorrichtung werden die Staub- oder Beizpartikel oder andere an Sensor oder den Sensor abschirmenden Elementen anhaftende Partikel entfernt, oder diese Partikel werden von dem Sensor lichtdurchlässigen oder den lichtdurchlässigen Elementen ferngehalten. Hierdurch werden die Lichtdetektoren im Bereich der Förderleitung gegen Staub und Beizpartikeln abgeschirmt. Weiteihin ergibt sich eine geschützte Anordnung des Sensors und der lichtdurchlässigen und den Sensor abschirmenden und als Dichtscheiben ausgebildeten Elemente durch die blendenartige Abschirmung.

In einfacher Weise kann die Reinigungs- oder Reinhaltevorrichtung ein Luftstrom sein, der als Luftschleier zwischen dem Sensor bzw. dem den lichtdurchlässigen Sensor abschirmenden Element und dem Körperchen bzw. Saatgutstrom eingeblasen wird. Dieser Luftstrom bildet dann einen Luftschleier, der die Partikel von dem Sensor bzw. dem den Sensor abschirmenden lichtdurchlässigen Element fernhält. Dieser Luftstrom wird auch zusätzlich zu dem Förderluftstrom, welcher die Körperchen bzw. Saatkörner innerhalb der Förderleitung transportiert, eingeblasen. Zwischen dem Sensor bzw. den die Sensoren abschirmenden luftdurchlässigen Elemente und dem Förderluftstrom wird ein zusätzlicher Luftstrom in die Förderleitung eingeblasen, um einen Luftschleier zwischen dem Förderluftstrom einerseits und dem Sensor bzw. den lichtdurchlässigen Elementen andererseits zu bilden.

Eine vorteilhafte Anordnung der Sensoren mit einer effektiven Reinhaltung der Sensoren wird dadurch erreicht, dass die Lichtemitter und Lichtdetektoren der Sensoren beabstandet zu der Kontur der Innenwand der Förderleitung angeordnet sind, dass die Reinigungsluft der Reinigungs- und/oder Reinhaltevorrichtung in dem Bereich der Kontur der Innenwand der Förderleitung und dem Lichtemitter und Lichtdetektor in zumindest etwa parallel zur Bewegungsrichtung der Körperchen einblasbar ist.

In einfacher Weise kann das Einblasen der Luft zur Bildung eines Luftschleiers zwischen dem Sensor bzw. den den Sensor abschirmenden lichtdurchlässigen Elementen und dem Saatgut und Partikelstrom dadurch erreicht werden, dass ein luftdurchlässiger Bereich zum Einblasen der Reinigungsluft in die Förderleitung im Bereich des Messraumes angeordnet ist.

In einer anderen Ausführung ist ein Fernhalten der Staubpartikel und Saatkörner von dem Sensor bzw. die den Sensor abschirmenden lichtdurchlässigen Elemente dadurch zu erreichen, dass in dem Bereich des Messraumes eine einen Unterdruck erzeugende Einrichtung angeordnet ist, um in dem Bereich der Lichtemitter und Lichtdetektoren der Sensoren und/oder den diesen abschirmende Bauteilen einen Unterdruck zu erzeugen.

Um auch unter schwierigen Bedingungen sicher zu stellen, dass keine Schmutzpartikel in den Hohlraum zwischen den lichtdurchlässigen Dichtungsscheiben oder dem Sensor einerseits und der die blendenartigen Schlitze aufweisenden Wandungen andererseits eintreten können, ist vorgesehen, dass zwischen den lichtdurchlässigen Dichtungsscheiben und der die blendenartigen Schlitze aufweisenden Wandungen sich ein Hohlraum befindet, dass dieser Hohlraum mit zumindest einem geringfügig höherem Luftdruck als der in der Förderleitung herrschende Luftdruck beaufschlagbar ist.

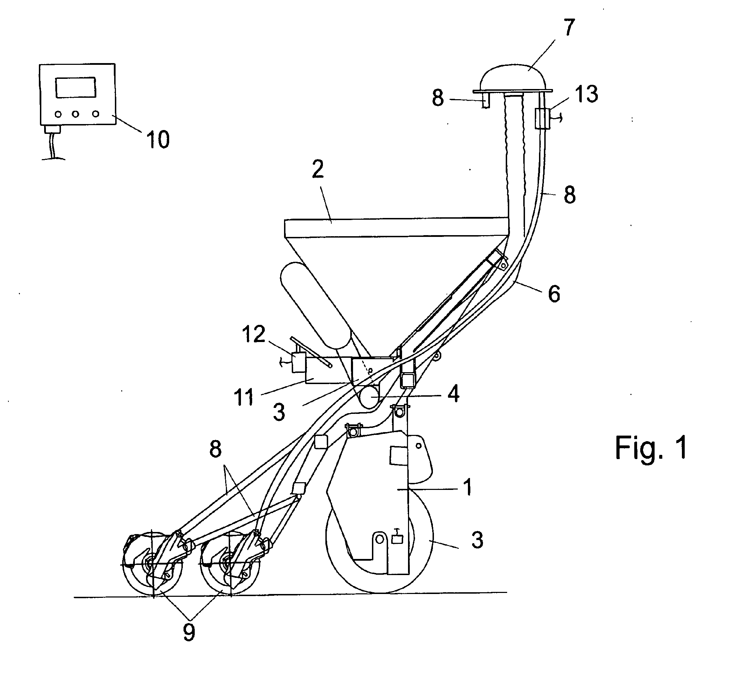

Weitere Einzelheiten der Erfindung sind den übrigen Unteransprüchen, der Beispielsbeschreibung und den Zeichnungen zu entnehmen. Hierbei zeigen
- Fig. 1: eine erfindungsgemäß ausgestattete Sämaschine in Prinzipdarstellung,

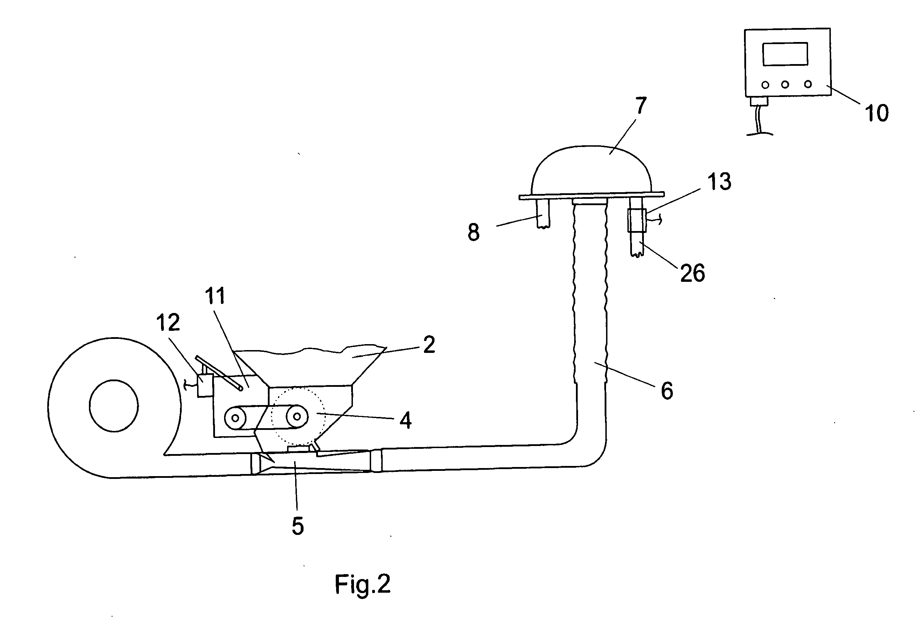

- Fig. 2: die Anordnung des Sensors zum Zählen kleiner Körperchen in Prinzipdarstellung,
- Fig. 3: den erfindungsgemäßen Sensor im Schnitt und vergrößerter Darstellung und in Prinzipdarstellung,
- Fig. 4: den Sensor in der Ansicht IV - IV,

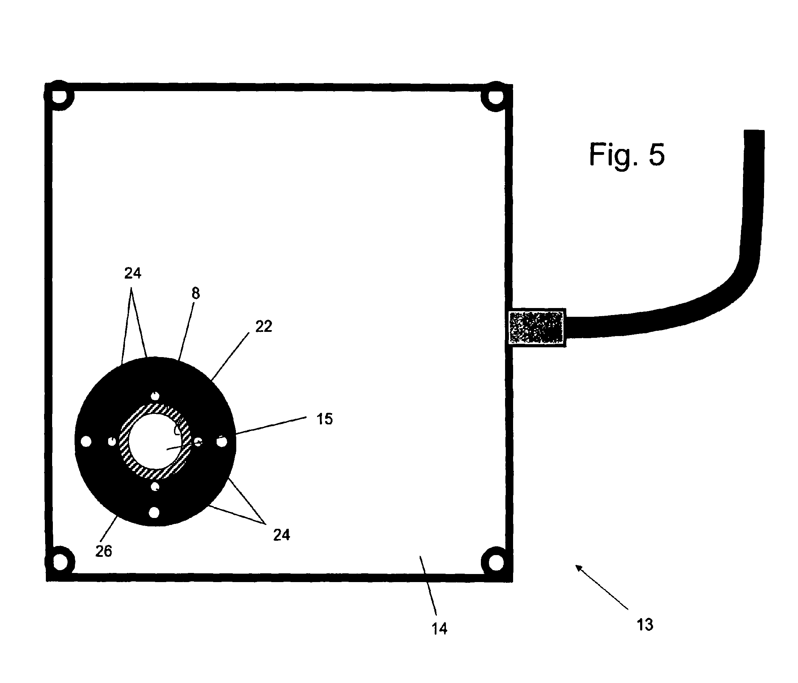

- Fig. 5: den Sensor in der Ansicht V - V,
- Fig. 6: einen weiteren erfindungsgemäßen Sensor im Längsschnitt und in Prinzipdarstellung,
- Fig. 7: den Sensor in der Ansicht VII - VII und
- Fig. 8: einen weiteren Sensor in Längsschnitt und in Prinzipdarstellung.

Die Sämaschine ist als pneumatische Verteilmaschine ausgebildet. Sie weist einen Rahmen 1 und Vorratsbehälter 2 auf. Der Rahmen 1 stützt sich auf Laufrädern 3 oder einer Bodenwalze auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die als Steigrohr ausgebildet ist, einleitet. Dieses Steigrohr 6 mündet an seinem oberen Ende in einem Verteilerkopf 7, über den das dosierte Saatgut auf die einzelnen sich an dem Verteilerkopf anschließenden Saatleitungen 8 aufgeteilt wird. Die Saatleitungen 8 führen zu den am Rahmen 1 angelenkten Säscharen 9. Dem Laufrad 3 ist eine Wegstreckenmesseinrichtung zugeordnet, die Messdaten an eine als Bordcomputer 10 ausgebildete elektronische Auswerteeinheit übermittelt. Der Dosierer 4 wird über einen Antriebsstrang und ein einstellbares Getriebe 11 von einer Kraftquelle angetrieben. Das Getriebe 11 wird über einen Einstellmotor 12 eingestellt und von dem Bordcomputern 10 angesteuert.

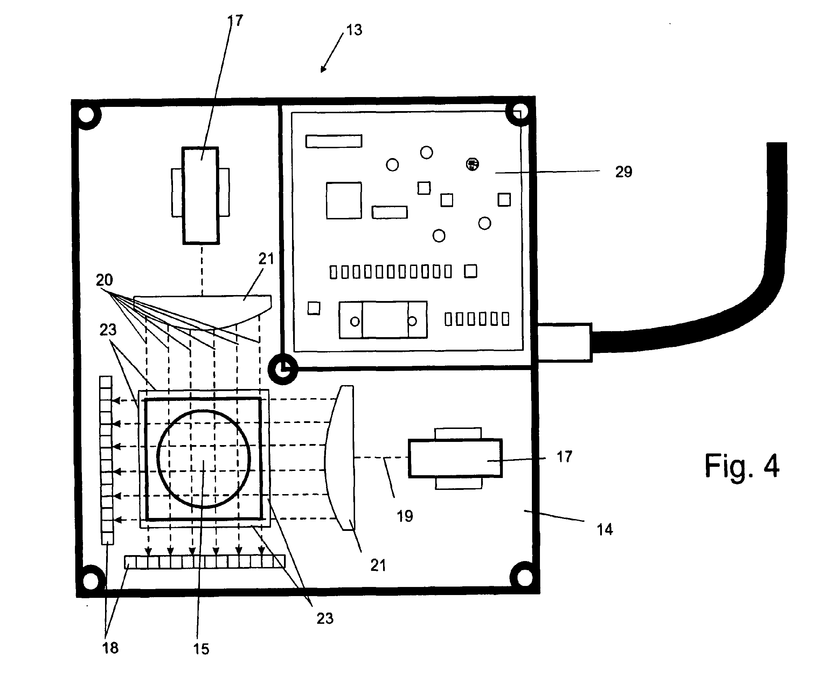

Zumindest eine der Saatleitungen 8 gibt eine Vorrichtung 13 zum optischen Zählen kleiner Körperchen, die als Körnerzählsensor 13 ausgebildet ist, zugeordnet. Der Sensor 13 ist in der Saatleitung 8 angeordnet und weist das Gehäuse 14 auf. In dem Gehäuse 14 befindet sich ein Messraum 15, den die in der Förderleitung 8 geförderten Saatkörner 16 passieren. Der Sensor 13 weist zumindest einen Lichtemitter 17 und einen zumindest Lichtdetektor 18 auf, wobei der Lichtdetektor 18 als CCD-Zeile oder Zeilenkamera ausgebildet ist. Der Lichtemitter 17 ist als Laserlichtquelle ausgebildet. Hierbei ist der jeweiligen Laserlichtquelle 17 eine den Laserlichtstrahl 19 breit auffächernde und parallele Lichtstrahlen 20 erzeugende Linse 21 angeordnet. Insgesamt weist der Sensor 13 zwei um 90° versetzt Lichtdetektoren 18 und Lichtemitter 17 auf, wie Fig. 4 zeigt. Die Lichtemitter 17 und Lichtdetektoren 18 der Sensoren 13 sind beabstandet zu der Kontur der Innenwand 22 der Förderleitung 8 angeordnet.

Die Lichtemitter 17 und Lichtdetektoren 18 der Sensoren 13 sind abgedichtet hinter beabstandet zu dem Durchmesser der Förderleitung 8 angeordneten lichtdurchlässigen Dichtungsscheiben 23 angeordnet. Beabstandet von den lichtdurchlässigen Dichtungsscheiben 23 ist die Innenwand 22 der Förderleitung 8 angeordnet.

In dem oberen Bereich des Gehäuses 14 des Körnerzählersensors 13 sind zwischen der Innenwand 22 der Förderleitung 8 und der der Förderleitung 8 zugeordneten Seite der lichtdurchlässigen Dichtungsscheiben 23 Öffnungen 24, die einen luftdurchlässigen bilden, angeordnet, durch welche Luft 25 auf die Seite der Dichtungsscheiben 23, die der Förderleitung 8 zugeordnet ist, eingeblasen wird. Diese eingeblasene Luft soll die durch die Förderleitung 8 geblasene Luft und die sich in dieser Luft befindlichen Schmutzpartikel jeder Art von den lichtdurchlässigen Dichtungsscheiben 23 fernhalten. Somit bilden die durch die in der Gehäusewand 26 des Gehäuses 14 des Körnerzählersensors 13 angeordnete Öffnungen 24 in Verbindung mit der eingeblasenen Luft 25 eine Reinigungs- und Reinhaltevorrichtung 27. Die Reinigungs- und Reinhaltevorrichtung 27 für die lichtdurchlässigen Scheiben 23 ist der eingeblasene Luftstrom 25. Dieser Luftstrom 25 wird in Richtung der Förderrichtung 28 des Förderluftstromes und der Bewegungsrichtung der zu zählenden Körper 16 eingeblasen. Der Luftstrom 25 wird zumindest annähernd parallel zur Bewegungsrichtung 28 der Körperchen 16 eingeblasen. Somit können die von der Linse 21 aufgefächerten Lichtstrahlen 20 des Lasers 17 in ausreichender Weise ungehindert durch die lichtdurchlässigen Scheiben 23 durchtreten und auf die CCD-Zeilen 17 oder Zeilenkamera auftreffen. Durch Unterbrechen der durch den Messraum 15 tretenden Saatkörner 16 wird der Lichtgang unterbrochen. Dieses wird von den CCD-Zeilen 18 oder der Zeilenkamera registriert und an die elektronische Auswertevorrichtung 29 des Körnerzählers 13 mit entsprechenden Signalen weitergeleitet. Aus diesen Signalen lässt sich dann die Anzahl der den Messraum 15 passierenden Körperchen 16 ermitteln. Aufgrund dieser ermittelten Werte steuert der Bordcomputer 10 den Einstellmotor 12 des Dosierers 4 um die gewünschte Ausbringmenge einzustellen.

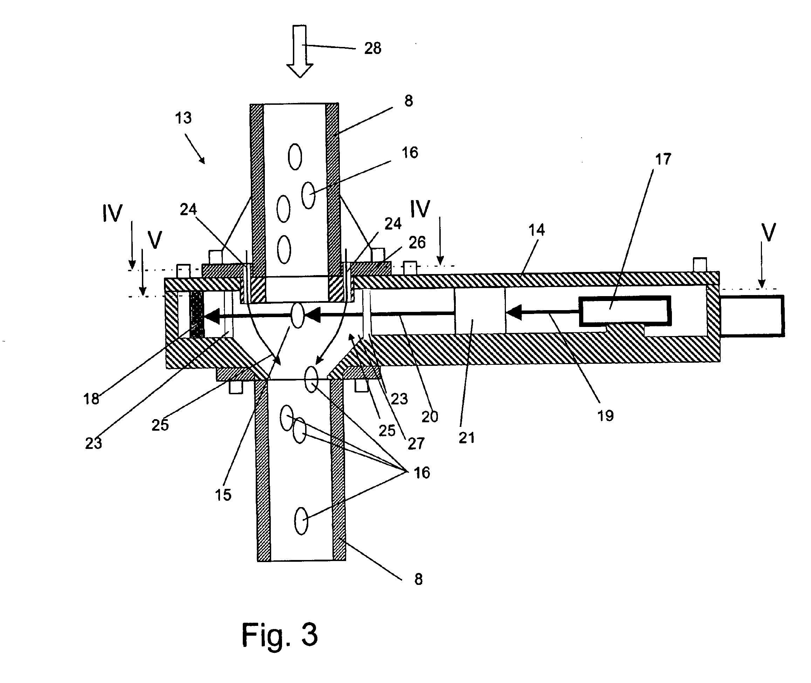

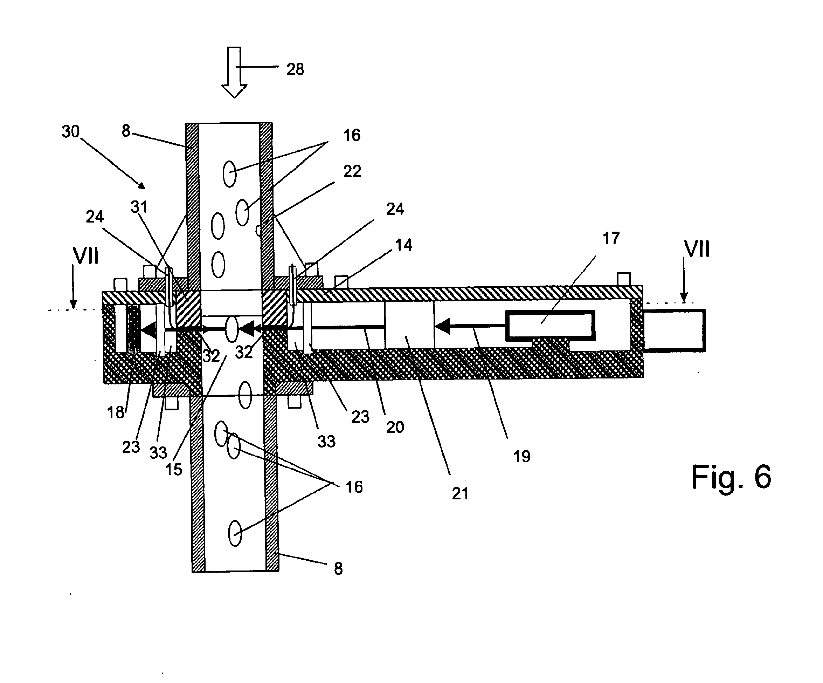

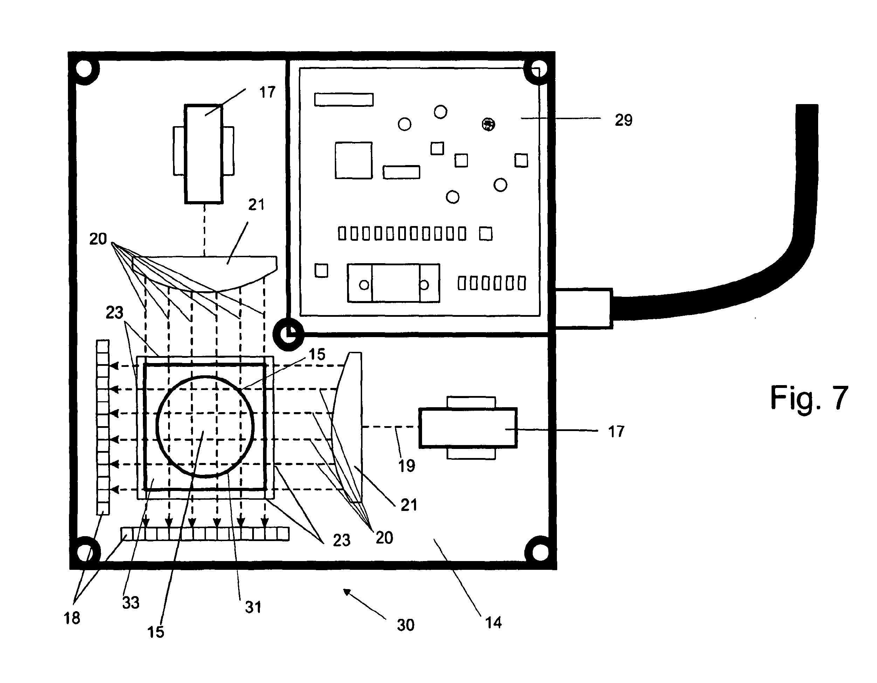

Der Sensor 30 gemäß Fig. 6 und 7 unterscheidet sich von dem Sensor 13 gemäß Fig. 3 dadurch, dass vor den lichtdurchlässigen Scheiben 23 und dem Lichtdetektor 18 und Lichtemitter 17 eine Ringblende 31 angeordnet ist, die einen blendenartigen Schlitz 32 aufweist. Diese Ringblende 31 bildet im Bereich des Messeraumes 15 des Sensors 30 die Wandung der Förderleitung 8. Der blendenartige Schlitz 32 in der Ringblende 31 bzw. der Wandung der Förderleitung 8 ist auf Höhe der Lichtemitter 17 und Lichtdetektoren 18 angeordnet. Zwischen den lichtdurchlässigen Dichtungsscheiben 23 und der den blendenartigen Schlitze 32 aufweisenden Wandung befindet sich ein Hohlraum 33. In der Gehäusewand 14 des Sensors 30 sind im Bereich zwischen der Ringblende 31 bzw. der Wandung der Förderleitung 8 und den Dichtungsscheiben 23 Öffnungen 24 als Lufteinlässe zum Einblasen von Luft 25 angeordnet. Die Öffnung 24 bilden den luftdurchlässigen Bereich. Somit ist der Hohlraum 33 mit einem geringfügig höheren Luftdruck als der in der Förderleitung 8 herrschende Luftdruck beaufschlagbar, so dass verhindert wird, dass sich der durch die als Förderleitung ausgebildeten Saatleitungen 8 strömenden Förderluft sich befindenden Schmutzpartikel durch den blendenartigen Schlitz 32 in den Hohlraum 33 bis an die lichtdurchlässigen Dichtungsscheiben 33 bzw. die Lichtemitter 17 oder Lichtdetektoren 18 gelangen können. Die Lichtemitter 17 oder Lichtdetektotren 18 sind beabstandet zu dem Durchmesser der Förderleitung 8 angeordnet. Wie bereits vor erwähnt, ist beabstandet von den Sensoren 17, 18 die Wandung der Förderleitung 8 angeordnet und in der Wandung der Förderleitung 8 ist auf Höhe der Lichtemitter 17 und der Lichtdetektoren 18 zumindest ein blendenartiger Schlitz 32 angeordnet, durch welchen die Lichtstrahlen 20 von dem Lichtemitter 17 zu dem Lichtdetektor 18 gelangen können.

In den Hohlraum 33 wird saubere Luft eingeleitet, wobei eine Filtervorrichtung zur Reinigung der in dem Hohlraum 33 eingeleiteten Luft vorgesehen ist. Es ist auch möglich, sich in einem Druckbehälter befindliche gereinigte Luft oder ein gereinigtes Gas in den Hohlraum 33 einzuleiten.

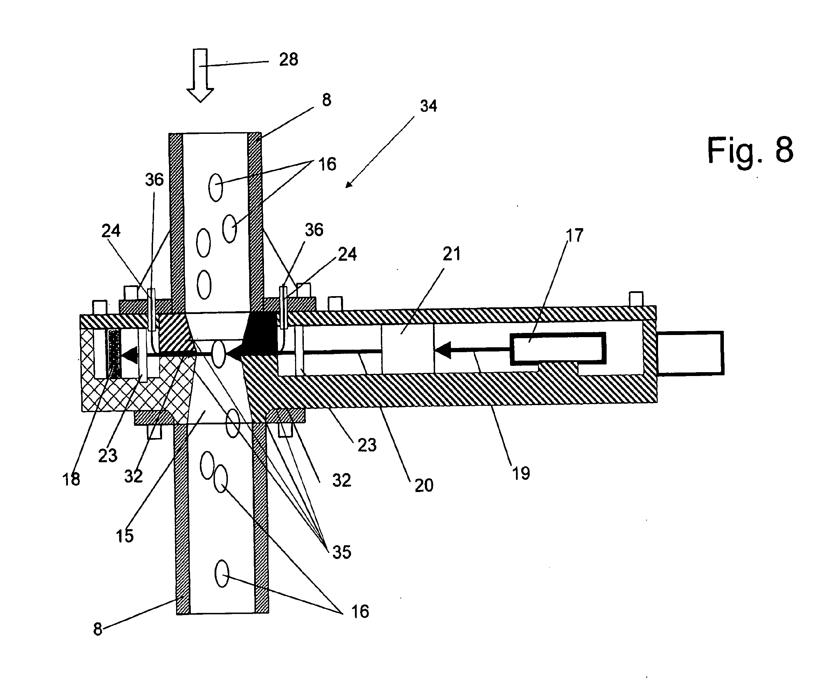

Der Körnerzählsensor 34 gemäß Fig. 8 unterscheidet sich von dem Körnerzähler 30 gemäß Fig. 6 dadurch, dass die Wand 35 der Förderleitung 8 im Bereich des Messraumes 15 im Bereich des blendenartigen Schlitzes 32 verengt und injektorartig ausgebildet sind, so dass durch diese verengte und injektorartige Ausbildung im Bereich des blendenartigen Schlitzes 32 bzw. der Lichtemitter 17 und Lichtdetektoren 18 bzw. den lichtdurchlässigen Dichtungsscheiben 23, die die Sensoren 17, 18 abschirmen, ein Unterdruck 36 erzeugt wird. Durch diesen in diem Bereich des Messraumes 15 erzeugten Unterdruck 36 wird verhindert, dass sich in dem Förderluftstrom befindliche Schmutzteile an den Lichtemitter 17 und dem Lichtdetektoren 18 bzw. die lichtdurchlässigen Scheiben 23 oder in den blendenartigen Schlitz 32 gelangen.

## Patentansprüche

1. Vorrichtung zum optischen Zählen kleiner Körperchen, insbesondere die von einer Sämaschine auszubringenden Saatkörner, bei denen die zu zählenden Körper einen mit optischen Sensoren besetzten und in einer Förderleitung angeordneten Messraum passieren und dabei den Lichtgang zwischen einem Lichtemitter und einem Lichtdetektor der Sensoren unterbrechen, wobei dem Sensor (13,30,34) eine Reinigungs- und/oder Reinhaltevorrichtung (24,25,31,32,35,36) zugeordnet ist, **dadurch gekennzeichnet, dass** die Reinigungs- und/oder Reinhalte vorrichtung ein Luftstromist und dass die Lichtemitter (17) und Lichtdetektoren (18) der Sensoren (13,30,34) abgedichtet hinter beabstandet zu dem Durchmesser der Förderleitung (8) angeordneten lichtdurchlässigen Dichtungsscheiben (23) angeordnet sind, dass beabstandet vor den lichtdurchlässigen Dichtungsscheiben (23) die Wandung der Förderleitung (8) angeordnet ist, dass in der Wandung der Förderleitung (8) auf Höhe der Lichtemitter (17) und Lichtdetektoren (18) zumindest ein blendenartiger Schlitz (32) angeordnet ist.

2. Vorrichtung nach Anspruch 1, **dadurch gekennzeichnet, dass** der Lichtemitter (17) als Laserlichtquelle ausgebildet ist.

3. Vorrichtung nach Anspruch 1, **dadurch gekennzeichnet, dass** der Lichtdetektor (18) als CCD-Zeile oder Zeilenkamera ausgebildet ist.

4. Vorrichtung nach Anspruch 1, **dadurch gekennzeichnet, dass** die Lichtemitter (17) und Lichtdetektoren (18) der Sensoren (13,30,34) beabstandet zu der Kontur der Innenwand (22) der Förderleitung (8) angeordnet sind, dass die Reinigungsluft (24,36) der Reinigungs- und/oder Reinhaltevorrichtung in dem Bereich der Kontur der Innenwand (22) der Förderleitung (8) und dem Lichtemitter (17) und Lichtdetektor (18) in zumindest etwa parallel zur Bewegungsrichtung (28) der Körperchen (16) einblasbar ist.

5. Vorrichtung nach Anspruch 1, **dadurch gekennzeichnet, dass** ein luftdurchlässiger Bereich (24) zum Einblasen der Reinigungsluft (25) in die Förderleitung im Bereich des Messraumes (15) angeordnet ist.

6. Vorrichtung nach einem oder mehreren der vorstehenden Ansprüche, **dadurch gekennzeichnet, dass** in dem Bereich des Messraumes (15) eine einen Unterdruck (36) erzeugende Einrichtung (35) angeordnet ist, um in dem Bereich der Lichtemitter (17) und Lichtdetektoren (8) der Sensoren (13,30,34) und/oder den diesen abschirmende Bauteilen (23) einen Unterdruck (36) zu erzeugen.

7. Vorrichtung nach Anspruch 1, **dadurch gekennzeichnet, dass** sich zwischen den lichtdurchlässigen Dichtungsscheiben (23) und der die blendenartigen Schlitze (32) aufweisenden Wandungen (31) sich ein Hohlraum (33) befindet, dass dieser Hohlraum (33) mit zumindest einem geringfügig höherem Luftdruck als der in der Förderleitung (8) herrschende Luftdruck beaufschlagbar ist.

8. Vorrichtung nach Anspruch 7 **dadurch gekennzeichnet, dass** saubere Luft in den Hohlraum (33) einleitbar ist.

9. Vorrichtung nach Anspruch 8 **dadurch gekennzeichnet, dass** eine Filtervorrichtung zur Reinigung der in den Hohlraum (33) eingeleiteten Luft vorgesehen ist.

10. Vorrichtung nach Anspruch 7, **dadurch gekennzeichnet, dass** gereinigte Luft oder ein gereinigtes Gas in den Hohlraum (33) einleitbar ist.

11. Vorrichtung nach Anspruch 7 **dadurch gekennzeichnet, dass** die Förderleitung (8) mit einem pneumatischen Förderluftstrom beaufschlagbar ist und dass der Luftdruck der in den Hohlraum (33) eingeleiteten Luft höher als der Druck des Förderluftstromes (28) ist.

## Claims

1. Device for optically counting small particles, in particular the seed grains to be applied by a seed drill, in which particles the bodies to be counted pass through a measurement space which is fitted with optical sensors and arranged in a feed line and in doing so interrupt the optical path between a light emitter and a light detector of the sensors, wherein the sensor (13, 30, 34) is assigned a cleaning and/or keep-clean device (24, 25, 31, 32, 35, 36), **characterized in that** the cleaning and/or keep-clean device is an air stream and **in that** the light emitters (17) and light detectors (18) of the sensors (13, 30, 34) are arranged in a sealed manner downstream of light-permeable sealing plates (23) which are arranged at a distance from the diameter of the feed line (8), **in that** the wall of the feed line (8) is arranged at a distance upstream of the light-permeable sealing plates (23), **in that** at least one diaphragm-type slit (32) is arranged in the wall of the feed line (8) at the height of the light emitters (17) and light detectors (18).

2. Device according to Claim 1, **characterized in that** the light emitter (17) is configured as a laser light source.

3. Device according to Claim 1, **characterized in that** the light detector (18) is configured as a CCD line or line-scan camera.

4. Device according to Claim 1, **characterized in that** the light emitters (17) and light detectors (18) of the sensors (13, 30, 34) are arranged at a distance from the contour of the inner wall (22) of the feed line (8), **in that** the cleaning air (24, 36) of the cleaning and/or keep-clean device can be blown in in the region of the contour of the inner wall (22) of the feed line (8) and the light emitter (17) and light detector (18) at least approximately parallel to the movement direction (28) of the particles (16).

5. Device according to Claim 1, **characterized in that** an air-permeable region (24) for blowing in the cleaning air (25) into the feed line is arranged in the region of the measurement space (15).

6. Device according to one or more of the preceding claims, **characterized in that** an apparatus (35) which generates a negative pressure (36) is arranged in the region of the measurement space (15) in order to generate a negative pressure (36) in the region of the light emitters (17) and light detectors (8) of the sensors (13, 30, 34) and/or the components (23) shielding said region.

7. Device according to Claim 1, **characterized in that** a cavity (33) is located between the light-permeable sealing plates (23) and the walls (31) having the diaphragm-type slits (32), **in that** at least a slightly higher air pressure than the air pressure prevailing in the feed line (8) is applicable to said cavity (33).

8. Device according to Claim 7, **characterized in that** clean air can be introduced into the cavity (33).

9. Device according to Claim 8, **characterized in that** a filter device for cleaning the air that has been introduced into the cavity (33) is provided.

10. Device according to Claim 7, **characterized in that** purified air or a purified gas can be introduced into the cavity (33).

11. Device according to Claim 7, **characterized in that** a pneumatic feed air stream is applicable to the feed line (8) and **in that** the air pressure of the air that has been introduced into the cavity (33) is higher than the pressure of the feed air stream (28).

## Revendications

1. Dispositif de comptage optique de petites particules, notamment de graines de semences à distribuer par un semoir, les particules à compter passant dans un espace de mesure équipé de capteurs optiques dans une conduite de transfert et les particules coupant ainsi le faisceau lumineux entre un photo-émetteur et un photo-détecteur des capteurs,
un dispositif de nettoyage (24, 25, 31, 32, 35, 36) étant associé au capteur (13, 30, 34),
**caractérisé en ce que**
- le dispositif de nettoyage et/ou de maintien propre est une vanne d'air et les photo-émetteurs (17) et les photo-détecteurs (18), installés de manière étanche pour isoler les photo-détecteurs (13, 30, 34) comportent des disques d'étanchéité (23) transparents à la lumière, installés dans le diamètre de passage de la conduite de transfert (8),
- la paroi de la conduite de transfert (8) se trouve à une distance devant les disques d'étanchéité (23) transparents à la lumière,
- au moins une fente en forme de diaphragme (32) se trouve dans la paroi de la conduite de transfert (8), à hauteur des photo-émetteurs (17) et des photo-détecteurs (18).

2. Dispositif selon la revendication 1,
**caractérisé en ce que**
le photo-émetteur (17) est une source de lumière-laser.

3. Dispositif selon la revendication 1,
**caractérisé en ce que**
le photo-détecteur (18) est une ligne CCD ou une caméra.

4. Dispositif selon la revendication 1,
**caractérisé en ce que**
les photo-émetteurs (17) et les photo-détecteurs (18) des capteurs (13, 30, 34) sont écartés du contour de la paroi intérieure (22) de la conduite de transfert (8),
- l'air nettoyé (24, 36) par le dispositif de nettoyage et/ou de maintien propre est injecté sensiblement parallèlement à la direction de mouvement (28) des corpuscules (16) dans la zone du contour de la paroi intérieure (22) de la conduite de transfert (8) et du photo-émetteur (17) et du photo-détecteur (18).

5. Dispositif selon la revendication 1
**caractérisé par**
une zone (24) perméable à l'air pour insuffler de l'air de nettoyage (25) dans la conduite de transfert dans la région de l'espace de mesure (15).

6. Dispositif selon une ou plusieurs des revendications précédentes,
**caractérisé en ce que**
une installation (35) générant une dépression (36) est prévue dans la région de l'espace de mesure (15) pour créer une dépression (36) dans la région des photo-émetteurs (17) et des photo-détecteurs (8) des capteurs (13, 30, 34) et/ou des composants formant écran (23).

7. Dispositif selon la revendication 1,
**caractérisé par**
une cavité (33) entre les disques d'étanchéité (23) transparents et les parois (31) comportant les fentes en forme de diaphragme (32),
une cavité (33) dans laquelle règne une pression d'air au moins légèrement supérieure à celle régnant dans la conduite de transfert (8).

8. Dispositif selon la revendication 7,
**caractérisé en ce que**
l'air propre est envoyé dans la cavité (33).

9. Dispositif selon la revendication 8,
**caractérisé par**
un dispositif de filtre pour nettoyer l'air arrivant dans la cavité (33).

10. Dispositif selon la revendication 7,
**caractérisé en ce que**
l'air nettoyé ou un gaz nettoyé sont conduits dans la cavité (33).

11. Dispositif selon la revendication 7,
**caractérisé en ce que**
la conduite de transfert (8) reçoit une veine d'air de transfert pneumatique, et
la pression de l'air introduit dans la cavité (33) est supérieure à celle de la veine d'air (28).
